# EUROPEAN PATENT SPECIFICATION

(11) **EP 2 700 927 B1**
(45) Date of publication and mention of the grant of the patent: **06.09.2017**
(21) Application number: 12774066.0
(22) Date of filing: 13.04.2012
(51) Int. Cl.: G01L 5/00, A47C 7/62, B60N 2/44, H01H 13/703, B60N 2/00

(54) **SEATING LOAD DETECTING DEVICE**
VORRICHTUNG ZUR ERKENNUNG DER LAST AUF EINEM SITZ
DISPOSITIF DE DÉTECTION DE CHARGE D'APPUI

(30) Priority: 22.04.2011 JP 2011096227
(43) Date of publication of application: 26.02.2014
(73) Proprietor: Aisin Seiki Kabushiki Kaisha, Aichi 448-8650 (JP)
(72) Inventor: YANAI Keiichi, Kariya-shi, Aichi 448-8650 (JP); TAKUMA Setsu, Kariya-shi, Aichi 448-8650 (JP); KONDO Hiromi, Kariya-shi, Aichi 448-0027 (JP); KUWABARA Takeshi, Kariya-shi, Aichi 448-0027 (JP); USAMI Kenichi, Kariya-shi, Aichi 448-0027 (JP)
(74) Representative: Winter, Brandl, Fürniss, Hübner, Röss, Kaiser, Polte - Partnerschaft mbB
(86) International application number: PCT/JP2012/060177
(87) International publication number: WO 2012/144442

(56) References cited:
- EP-A1- 1 626 423
- JP-A- 2001 133 340
- JP-A- 2005 038 828
- JP-A- 2006 153 608
- JP-A- 2012 051 548
- US-B1- 6 546 822

## Description

### TECHNICAL FIELD

This invention relates to a seating load detecting device provided on a vehicle seat for detecting a seating load of an occupant of a vehicle seated on the vehicle seat.

### BACKGROUND OF THE TECHNOLOGY

Conventionally, in order to improve the performance of the safety devices, such as for example, seat belts and air bags equipped in the vehicle, such safety devices are controlled by detecting a seating state of an occupant of the vehicle seat. However, the seat is occupied not only by a human but also occupied by a baggage or the like other than human and it would be difficult to correctly judge whether the seat is occupied by a human or a baggage by distinguishing the two. This judgment is very important for correctly operating the safety devices.

A thin membrane switch with flexibility is considered to be appropriate for detecting the seating state of the occupant of the seat. A seat sensor using for one of such switches is disclosed in a Japanese patent Document 1. The seat sensor is formed by a first film linearly formed, a second film having the same shape with the first film and disposed facing to the first film, a pair of sensor cell sensor electrodes ("portion to contact" and "portion to be contacted") each being oppositely arranged with a distance separated from each other and energized by contacting operation upon a load applied thereon, an energizing electrode as an energizing portion disposed between the first and the second films for energizing the sensor electrodes and a connector connected to each one end of the first and the second films and energized to the sensor electrodes through the energizing electrode. The seat sensor is arranged on a seat surface so that the sensor is directed in an inclined direction relative to the vehicle front/rearward direction and the vehicle right/left direction. According to this structure, when an occupant of the vehicle seat is seated with a correct posture, the two sensor cells (pressure sensitive switches) are positioned to be in contact with the hip portion of the occupant.

### DOCUMENT LIST OF STATE OF ART

### PATENT DOCUMENT

Patent Document 1: JP2008-157914 A. EP1626423 shows a seating load detecting device with a plurality of switches with a first and a second film and a partition element disposed between the films and formed with a plurality of penetration holes positioned opposite to the plurality of the switches.

### DISCLOSURE OF INVENTION

### PROBLEMS TO BE SOLVED

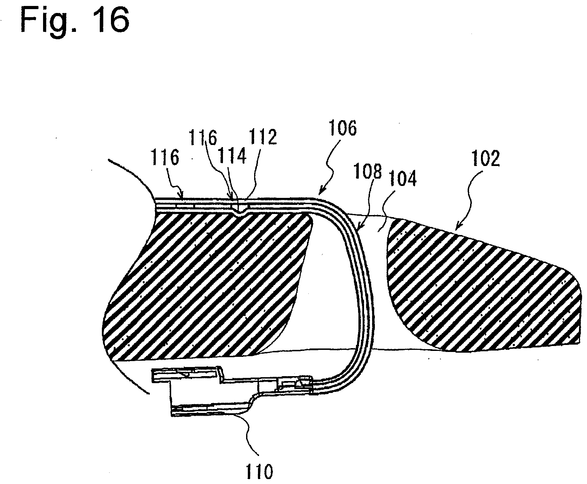

However, in a seat cushion design which has a line arranged between the two sensor cells (pressure sensitive switch) or in the vicinity thereof and extending in a vehicle width direction, the sensors have to be arranged to fit the groove shape, or if the sensor is to be arranged on the straight line, in many cases of this structure as shown in Fig. 16 of the attached drawings, the seat sensor is provided by forming a relief hole 104 in the seat cushion 102 through which the base end portion 108 of the membrane switch 106 and the connector 110 pass. The main body portion of the membrane switch 106 is disposed under a bent state. Since the membrane switch 106 is formed by a plurality of film layers, the perimeter of the bent outside film (second film) 112 thereof differs from the perimeter of the inside film (first film) 114 thereof. This perimeter difference between the outside and inside leads to a generation of strain caused by bending stress at the cell portions (pressure sensitive switch), by which the first film 114 side of the pressure sensitive switch 116 swells to change the distance between the films and the shapes thereof to be energized. Thus, some defects, such as a defect that the sensor cannot be actuated to be ON, or the sensor is not actuated to be ON correctly responding to a predetermined load applied thereon.

Accordingly, this invention was made considering the above conventional drawbacks and it pertains to a seating load detecting device which can correctly detect the occupant seating state, even the seating load detecting device is provided on the vehicle seat cushion under the device being in bent state.

### MEANS FOR SOLVING THE PROBLEMS

In order to solve the above problems, the feature of the invention is characterized in that the seating load detecting device includes a band shaped first film formed by a plurality of portions to be contacted, each portion being separated with a distance from each other forming a pressure sensitive switch for detecting a seating state of an occupant of a seat and a switch connecting wiring connecting the plurality of portions to be contacted, a band shaped second film disposed facing to the first film and formed by a plurality of portions to contact forming the pressure sensitive switch and contacting with or separating from the corresponding plurality of portions to be contacted and a partition member disposed between the first and the second films and formed with a plurality of penetration holes positioned opposite to the plurality of pressure sensitive switches and an air passage communicating with the plurality of penetrating holes and exposed to the atmosphere.

The first and the second films between which the partition member is interposed, are attached to a seating surface of the seat under the films being bent.

The partition member includes a relief hole provided between a bent portion formed by the first and the second films when attached to the seating surface of the seat and one of the plurality of pressure sensitive switches positioned closest to the bent portion for absorbing a strain generated due to a perimeter difference between the first and the second films.

According to the feature of the invention associated with claim 2, in claim 1, the relief hole is in communication with a communication hole provided, at least, at one of the first and the second films.

According to another feature of the invention associated with claim 3, in claim 2, the relief hole is not in communication with the air passage.

According to still another feature of the invention associated with claim 4, in claim 1, the relief hole is in communication with the air passage.

According to a further feature of the invention associated with claim 5, in claim 4, the length of the relief hole in a width direction relative to the seating load detecting device is set to be longer than the length of the air passage in a width direction.

According to a still further feature of the invention associated with claim 6, in any of claim 1, 4 and 5, the relief hole is provided only at the partition member and is closed by the first and the second films.

According to a feature of the invention associated with claim 7, in any one of claims 1 through 6, the length of the relief hole in a longitudinal direction relative to the seating load detecting device is set to be longer than the length of each penetration hole.

According to a further feature of the invention associated with claim 8, in any one of claims 1 through 7, the length of the relief hole in the width direction relative to the seating load detecting device is equal to or more than the half of a portion where the relief hole is to be provided in a width direction relative thereto.

According to the feature of the invention associated with claim 9, in any of claims 1 through 8, the relief hole is provided to be of rectangular shape, of oval shape or of hexagonal shape.

According to the feature of the invention associated with claim 10, in any of claims 1 through 9, the first and the second films and the partition member are overlapped by adhesion by means of adhesive agent or by welding by means of ultrasonic wave welding.

### EFFECTS OF THE INVENTION

According to the invention of claim 1, when the seating load detecting device formed mainly by the first and the second films and the partition member provided between the first and the second films is attached to the vehicle seat with bending, the perimeter of the inner side film differs from the perimeter of the outer side film under the bent state. Due to such difference, conventionally the first and the second films or either one may expand in a direction in which both are separated from each other or may contract in a direction in which both approach to each other at the portion to be contacted and the portion to contact corresponding to the penetration hole where the first and the second films are not adhered to the partition member. However, according to the structure of the invention, a relief hole is provided at the partition member at a position between the pressure sensitive switch positioned closest to the bent portion and the bent portion. The relief hole absorbs the stress strain generated as explained above. Accordingly, a change of distance between the portions to be contacted and the portions to contact of the pressure sensitive switch which may occur due to such strain can be prevented. Thus, according to the invention, the seating load of the occupant of the vehicle seat can be highly accurately detected even the seating load detecting device is arranged under the bent state.

According to the invention of claim 2, when the relief hole is in communication with the communication hole provided at the first and the second films, the relief hole is not sealed due to the exposure to the atmosphere via the communication hole and both first and the second films are easily bent to keep the strain absorbing function.

According to the invention of claim 3, the relief hole is not in communication with the air passage and accordingly, any invasion of water into the pressure sensitive switch side through the relief hole can be prevented.

According to the invention of claim 4, since the relief hole is in communication with the air passage and accordingly, not sealed due to the exposure to the atmosphere via the air passage, the first and the second films are easily bent in the relief hole. Further, since the air passage is formed at the partition member covered by the first and the second films, water invasion into the pressure sensitive switch side from the relief hole can be prevented.

According to the invention of claim 5, the length of the relief hole in a width direction relative to the seating load detecting device can be set to be longer than the length of the air passage in a width direction.

According to the invention of claim 6, since the relief hole is closed by the first and the second films, even the relief hole is provided at a position where the relief hole communicates with the communication hole and at the same time in the vicinity of the penetration hole, entering of any external objects or water into the penetration hole can be prevented. This can allow freedom of designing a provision of the relief hole and yet can prevent lowering of function of the pressure sensitive switch.

According to the invention of claim 7, since the length of the relief hole in a longitudinal direction relative to the seating load detecting device is set to be longer than the length of each penetration hole, a strain in a longitudinal direction which would have been generated in the penetration hole in a conventional structure can be mostly absorbed in the relief hole.

According to the invention of claim 8, since the length of the relief hole in the width direction relative to the seating load detecting device is equal to or more than the half of a portion where the relief hole is to be provided in a width direction relative thereto, the strain to be transmitted from the bent side to the pressure sensitive switch side can be sufficiently absorbed in the relief hole to minimize the influence of the strain on the pressure sensitive switch.

According to the invention of claim 9, the relief hole can be provided to be of rectangular shape, of oval shape or of hexagonal shape.

According to the invention of claim 10, the first and the second films and the partition member can be formed to be overlapped by adhesion by means of adhesive agent or by welding by means of ultrasonic wave welding.

### BRIEF EXPLANATION OF ATTACHED DRAWINGS

[Fig. 1] Fig.1 is a view illustrating the seating load detecting device according to the invention arranged on a vehicle seat cushion;
[Fig.2] Fig.2 shows a cross sectional view of the seating load detecting device cut along the line II - II of Fig. 1;
[Fig. 3] Fig. 3 is a lower side view of the seating load detecting device;
[Fig. 4] Fig. 4 is a side view of the seating load detecting device;
[Fig. 5] Fig. 5 is an enlarged view of a portion of the first film;
[Fig. 6] Fig. 6 is a partially enlarged view of the partition member;
[Fig. 7] Fig. 7 is an enlarged view of a portion of the second film;
[Fig.8] Fig.8 is a cross sectional view of the pressure sensitive switch;
[Fig. 9] Fig. 9 is a view illustrating the seating load detecting device under a state that the device is bent, arranged on a vehicle seat cushion;
[Fig. 10] Fig. 10 is an enlarged view of a portion of the first film according to a different embodiment of the invention;
[Fig. 11] Fig. 11 is a partially enlarged view of the partition member according to the different embodiment of the invention;;
[Fig. 12] Fig. 12 is an enlarged view of a portion of the second film according to the different embodiment of the invention;
[Fig.13] Fig.13 is a cross sectional view of the pressure sensitive switch according to the different embodiment of the invention;
[Fig. 14] Fig. 14 is a partial plane view of the relief hole according to the different embodiment;
[Fig. 15] Fig. 15 is a cross sectional view of the relief hole cut along the line XV-XV in Fig. 14 according to the different embodiment of the invention; and
[Fig. 16] Fig. 16 is a view illustrating the seating load detecting device under a state that the device is bent, arranged on a vehicle seat cushion according to a conventional device.

### THE EMBODIMENTS FOR IMPLEMENTING THE INVENTION

### (Embodiments)

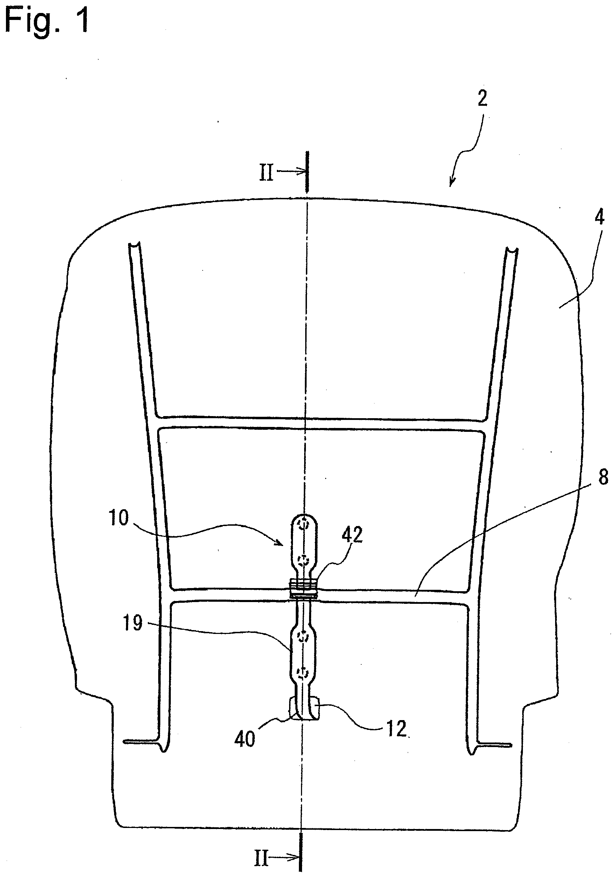

The embodiments of seating load detecting device implemented on a vehicle seat according to the invention will be explained with reference to the attached drawings. Fig. 1 illustrates a plane view showing the seat surface of a seat cushion 2 of the vehicle seat for individual use. It is noted that the upper portion as viewed in Fig. 1 indicates a frontward of the seat cushion 2 and the lower portion indicates a rearward, the rightward portion indicates a rightward and the leftward portion indicates a leftward of the seat cushion 2.

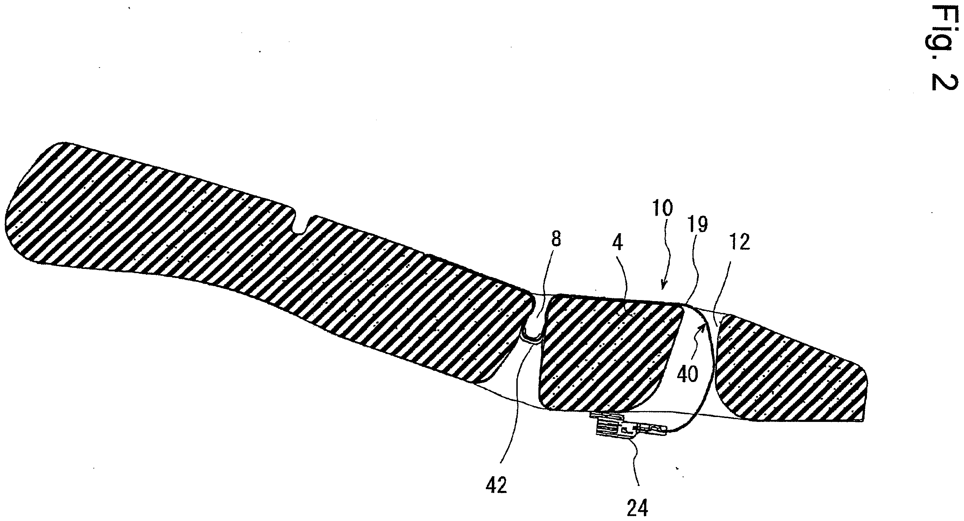

The seat cushion 2 as viewed in Figs. 1 and 2, is formed by a pad member 4 formed by a urethane material or the like and a skin member (not shown) formed by a cloth material (or a leather material, etc.) which covers the seating side surface of the pad member 4. A recessed groove 8 is provided on the upper surface of the pad member 4 of the seat cushion 2. The recessed groove 8 is caved in the upper surface of the pad member 4 and extends in a right/left direction. An insertion hole 12 is formed at the the pad member 4 penetrating through from the upper surface to the lower surface of the pad member 4 for inserting therein a base end portion of the seating load detecting device 10.

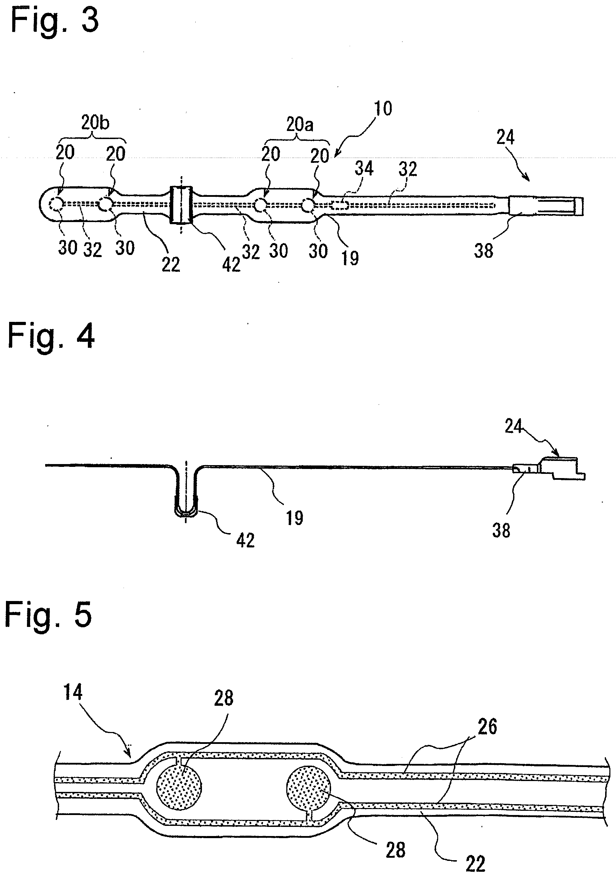

The seating load detecting device 10 is formed mainly by a membrane switch 19 which is formed by overlapping a pair of a first film 14 and a second film 16 interposing an insulating spacer 18 which functions as a partition member. The membrane switch 19 is formed to be of an elongated band shape as viewed in Figs. 3 and 4. The membrane switch 19 includes two pairs (four) of pressure sensitive switches 20, 20, a conductive portion 22 for connecting the pressure sensitive switches 20 and a connector portion 24 provided at one end portion of the conductive portion 22.

The first film 14 is formed by a PEN (polyethylene naphthalate) material, the thickness thereof being 0.1 mm and on which two parallel switch connecting wirings 26 conductively connected to the positive and negative electrodes of the connector portion 24, respectively, are formed by printing as shown in Fig. 5. A portion of the first film 14 corresponding to the position of the pressure sensitive switches 20 is formed to be wider in a width direction than other portions and a pair of circular portions 28 to be contacted is provided at the wider portion by printing. Each of the circular portions 28 is electrically conducted with each one of the switch connecting wirings 26, respectively.

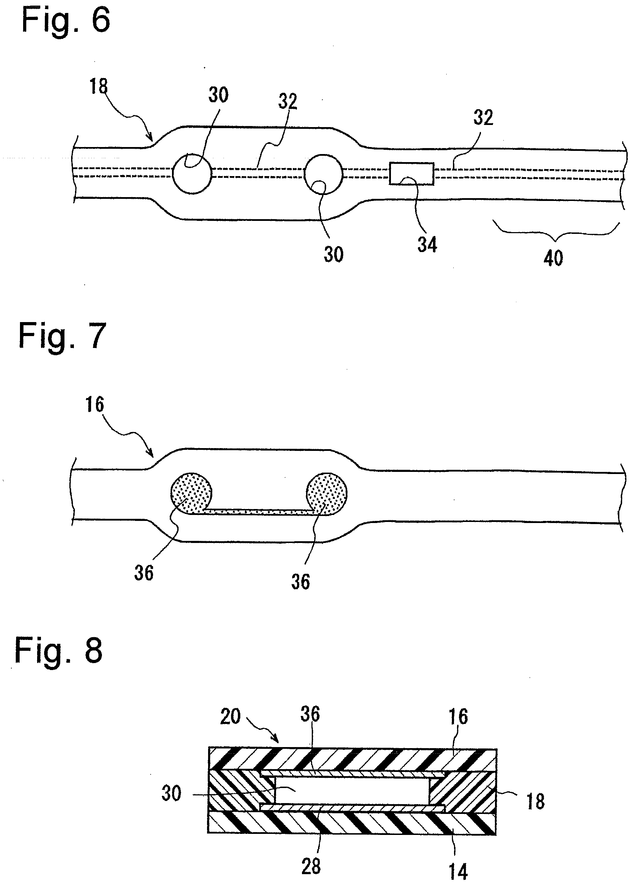

The insulating spacer 18 is formed by PEN (polyethylene naphthalate) material, the thickness thereof being 0.15mm and as shown in Fig. 6, a pair of penetration holes 30 is provided at a portion corresponding to the position of the pressure switches 20 penetrating through the spacer 18 in a thickness direction. An air passage 32, the thickness thereof being 0.15mm in a width direction is provided at the side walls of the penetration holes 30 and open to the penetration holes 30. The air passage 32 is in communication with the ventilation opening (not shown) provided at the first film 14 or the second film 16 to be exposed to the atmosphere. A rectangular shaped relief hole 34 is provided at a position in the connector portion 24 side of the penetration holes 30 and is positioned closest to the connector portion 24. The length of the relief hole 34 in a longitudinal direction relative to the insulating spacer 18 is for example, set to be 120mm when the length of the penetration hole 30 in a longitudinal direction is set to be 11.5mm. The length of the relief hole 34 in a width direction is set to be 7.0mm when the width of the insulating spacer 18 is set to be 13.0mm.

The sizes exampled above are just for the examples, and accordingly, setting of various sizes other than above are possible. It may be preferable to set the longitudinal length of the relief hole 34 in the longitudinal direction of the membrane switch 19 to be longer than the longitudinal length of the penetration hole 30 in the longitudinal direction of the membrane switch 19. Further, it is preferable to set the width length of the relief hole 34 in the width direction of the membrane switch 19 to be equal to or more than the half of the width length of the penetration hole 30 in the width direction of the membrane switch 19.

The second film 16 is formed to be of similar shape with the first film 14 and a pair of conductive circular portions 36 to contact is formed at the portion corresponding to the position of the pressure sensitive switches 20 by printing or the like.

The first and the second films 14 and 16 and the insulating spacer 18 are formed to be overlapped and adhered to one another by means of adhesive agent or by ultrasonic welding process so that an external object or water cannot enter inside. A space is formed at each penetration hole 30 where the portion 28 of the first film 14 to be contacted is contacted with or separated from the portion 36 of the second film 16 to contact by adhesion of the first and the second films by overlapping. The circular portion 28 (lower side electrode) of the first film 14 and the circular portion 36 (upper side electrode) of the second film 16 are oppositely and concentrically formed relative to the penetration hole 30 and when a load in a thickness direction is applied on the pressure sensitive switch 20, the portion 36 to contact contacts with the portion 28 to be contacted to turn the switch ON. By this switching contact, the electric current flow therethrough can be detected. The pressure sensitive switch is formed with two sets 20a and 20b of pressure sensitive switches 20, 20 formed by connecting the base end side and the tip end side in series. The two sets of the pressure sensitive switches 20a and 20b are arranged in parallel with the switch connecting wirings 26.

An external output portion 38 is provided at the base end portion of the membrane switch 19. The external output portion 38 outputs a load detected by the pressure sensitive switch 20 and an output electrode is formed. A connector is connected to the external output portion 38 to form the connector portion 24. The connector portion 24 is connected to an ECU (Electronic control unit: not shown) which judges whether an occupant is seated on the seat or not.

The base end portion of the membrane switch 19 is inserted into the insertion hole 12 of the pad member 4 as shown in Figs. 1 and 2. After the base end portion is fixed to the frame (not shown) in the rear side surface of the seat cushion 2, a bent portion 40 is formed such that a position of the membrane switch moved from the relief hole 34 side to the connector portion 24 side is bent downward. Further, a holder 42 is provided between the set 20a of the pressure sensitive switches 20, 20 at the base end portion side of the membrane switch 19 and the other set 20b of the pressure sensitive switches 20, 20 at the tip end portion side of the membrane switch 19 and the membrane switch 19 is bent by the holder 42 and inserted into the recessed groove 8 thereby fixing the membrane switch 19 to fit to the recessed groove 8. The membrane switch 19 is bent when being inserted into the recessed groove 8. However, the switch 19 is bent at both the inlet and outlet portions of the groove 8 and at the innermost portion and accordingly the difference in perimeter caused by the bending of the first and the second films 14 and 16 can be compensated. Thus the strain is not generated which may influence on the operation of the pressure sensitive switch 20.

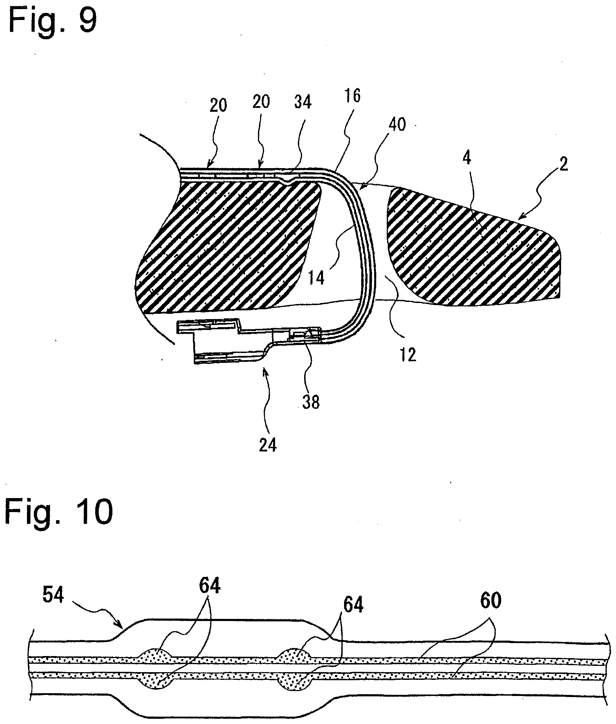

According to thus explained seating load detecting device 10, as shown in Fig. 9, the base end portion of the membrane switch 19 is inserted into the insertion hole 12 of the pad member 4 and the base end portion is fixed to the seat cushion 2 at the rear surface thereof. Then the bent portion 40 is formed in which the first film 14 is positioned outside of the bent portion 40 relative to the second film 16. Accordingly, a perimeter difference between the first and the second films 14 and 16 is generated and the second film 16 is compressed in a longitudinal direction and on the other hand the first film 14 is expanded to generate strain. However, the relief hole 34 is provided in the insulating spacer 18 adhered between the first and the second films 14 and 16. Since no adhesion between the first and the second films 14 and 16 is made at the area of the relief hole 34, the compressed first film 14 at the area of the relief hole can be expanded to absorb the strain. Accordingly, no need for changing the separated distance between the mutually opposing portions 28 and 36 depending on the strain or no need for deforming the films 14 and 16 to relieve the strain which would have been necessary for a conventional device. In operation, one or both of the two sets 20a and 20b of the pressure sensitive switches 20, 20 are simultaneously turned ON, the current is flown through the switch connecting wires 26 to output the detected seating load signal. Accordingly, erroneous detection such as a detection of a load of a package which area on the seat is small can be prevented. Upon receipt of the seating load signal by the current flow, the ECU judges whether the load on the seat cushion 2 is a person or not. When judged that the detected load is a person's weight, the airbag system is set to be in an operable state or warning is outputted that the seatbelt is not fastened.

According to the seating load detecting device 10 thus structured above, when the membrane switch 19, mainly formed by the first film 14, the second film 16 and the insulating spacer 18 disposed between the first and the second films 14 and 16, is attached to the seat cushion 2 with bending, the perimeter difference occurs between the first film 14 positioned inside relative to the bent portion and the second film 16 positioned outside relative to the bent portion. Accordingly, conventionally as illustrated in Fig. 16, the pressure sensitive switch 116 in which the first and the second films 114 and 112 are not adhered to the insulating spacer 118 generates a strain at either one or both of the first and the second films 114 and 112 due to an expansion in a direction mutually separating or a contraction in a direction mutually approaching. However, according to the pressure sensitive switch 20 of the embodiment of the invention shown in Fig.9, since the relief hole 34 provided between one pressure sensitive switch 20 which is provided closest to the bent portion 40 and the bent portion 40 can absorb such strain caused by the expansion or contraction, the distance between the portion 28 to be contacted and the portion 36 to contact is not changed by such strain. Thus, even the seating load detecting device 10 is arranged by bending, the seating load of an occupant can be highly accurately detected.

Further, since the relief hole 34 is in communication with the air passage 32 and is provided at a portion of the insulating spacer 18 which is covered by the first and the second films 14 and 16, any water invasion from the relief hole 34 to the pressure sensitive switch 20 side can be prevented. Still further, since the relief hole 34 is in communication with the air passage 32 which is exposed to the atmosphere, the relief hole 34 is not sealed which enables the oppositely arranged first and the second films 14 and 16 to be easily bent keeping a good state of absorbing the strain.

Further, since the relief hole 34 is closed by the first and the second films 14 and 16, even the relief hole is provided to be in communication with the air passage 32 and to be positioned close to the penetration hole 30, any foreign materials such as water or the like cannot be entered into the penetration hole 30 and accordingly the freedom of designing the relief hole 34 can be highly secured without reducing the operation function of the pressure sensitive switch 20.

The length of the relief hole 34 in a longitudinal direction relative to the membrane switch 19 is set to be longer than the length of the penetration hole 30 of the pressure sensitive switch 20 in a longitudinal direction and accordingly, most of the strains generated in a longitudinal direction, which would have been conventionally absorbed by the penetration hole 30 according to the conventional structure, can be absorbed by the relief hole 34 according to the structure of the embodiment of the invention.

The length of the relief hole 34 in a width direction is equal to or more than the half of the length of the membrane switch 19 in a width direction. Accordingly, the strain transmitted from the bent portion 40 side to the pressure sensitive switch 20 side can be sufficiently absorbed to minimize the influence of the strain on the pressure sensitive switch 20.

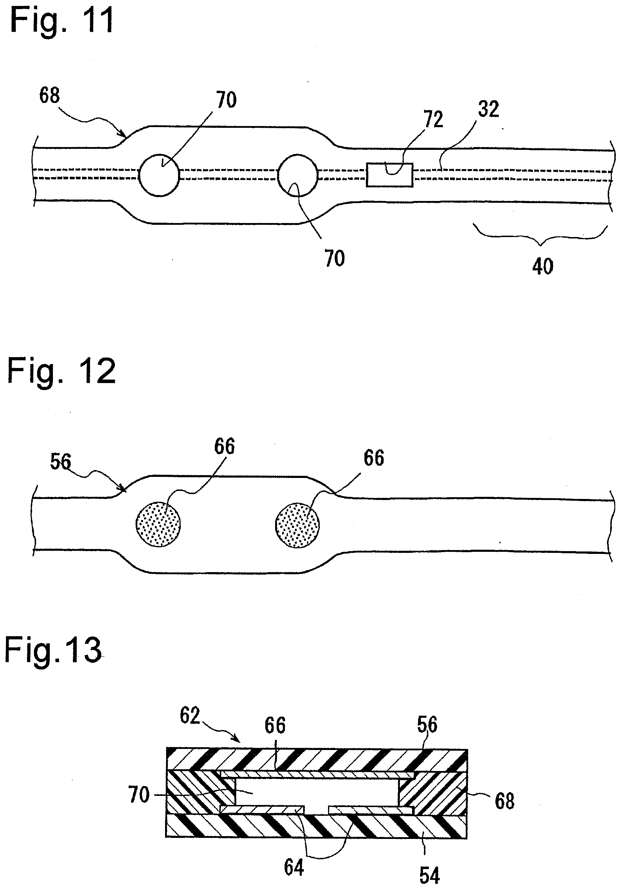

It is noted here that according to the embodiment explained above, the membrane switch19 is formed by a set 20b of the pressure sensitive switches 20, 20 at the tip end side and another set 20a of the switches 20, 20 at the base end side and when both switches 20, 20 of either one or both of the sets 20a and 20b are simultaneously turned ON, the switch connecting wiring 26 is energized to output seating load detecting signal. However, the invention is not limited to this embodiment, but some other modified embodiment, such as for example, shown in Figs. 10 through 13 would be applicable, in which the first film 64 includes a pair of switch connecting wirings 60, 60 arranged in parallel and electrically conducted with respective electrodes and a pair of portions 64, 64 to be contacted each having a crescent shape disposed at the corresponding positions to the pressure sensitive switches 62 of the switch connecting wirings 60. The second film 56 includes a pair of portions 66, 66 to contact positioned corresponding to the pair of portions 64, 64 to be contacted. The pair of adjacently located portions 64, 64 to be contacted is energized when the portions 66 contact with the portions 64. According to this structure, a penetration hole 70 is provided in an insulating spacer 68 at the position corresponding to the position of the pressure sensitive switch 62 and a relief hole 72 is formed near the penetration hole 70 which is positioned at the most base side end portion.

In this embodiment, when one of the pressure sensitive switches 62 is turned ON, a seating load detecting signal is outputted. The other structure of the components and operation are the same with those of the previous embodiments.

The shape of the relief hole is not limited to the rectangular shape and other shape, such as oval or hexagonal shape may be applicable.

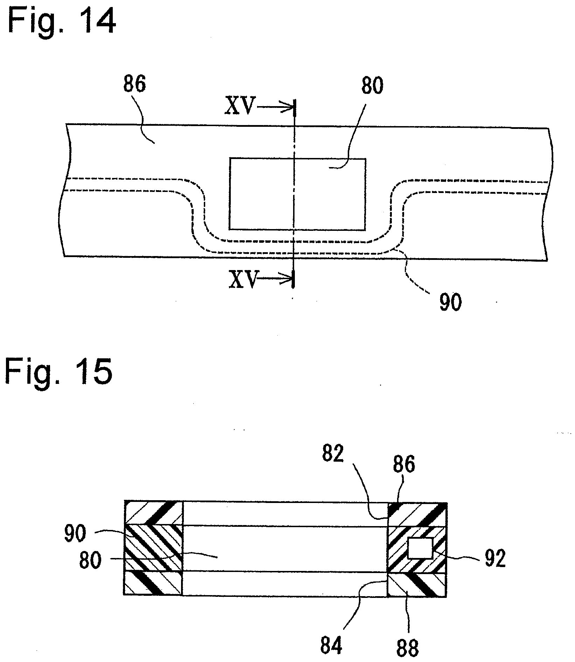

As shown in Figs. 14 and 15, according to the structure of the relief hole 80, communication holes 82 and 84 which are exposed to the atmosphere are provided at the first and the second films 86 and 88, respectively. Thus, the relief hole 80 is not closed and is easily bent. In this case, the water invasion into the pressure sensitive switch side may be prevented by forming the air passage 92 provided at the insulating spacer 90 by bypassing the relief hole 80.

The embodiments of the invention are explained hitherto, however, the invention is not limited to the explained embodiments but other modifications or alterations of the embodiments can be included in the invention within the subject matter of the invention.

### INDUSTRIAL APPLICABILITY OF THE INVENTION

The seating load detecting device according to the invention is applicable to a detection of seating load by the seating load detecting device arranged on the seat cushion by bending.

### EXPLANATION OF REFERENCE NUMERALS

In the drawings:
2: seat cushion, 10: seating load detecting device, 14: first film, 16: second film, 18: partition member (insulating spacer), 19: seating load detecting device (membrane switch), 20: pressure sensitive switch, 26: switch connecting wiring, 28: portion to be contacted, 30: penetration hole, 32: air passage, 34: relief hole, 36: portion of contacting/separating, 40: bent portion, 54: first film, 56: second film, 60: switch connecting wiring, 62: pressure sensitive switch, 64:portion to be contacted, 66:portion of contacting/separating: 68: partition member (insulating spacer), 70: penetrating hole, 72: relief hole.

## Claims

1. A seating load detecting device (10) including a band shaped first film (14) formed by a plurality of portions (28) to be contacted, each portion being separated with a distance from each other forming a pressure sensitive switch (20) for detecting a seating state of an occupant of a seat and a switch connecting wiring (26) connecting the plurality of portions to be contacted, a band shaped second film (16) disposed facing to the first film and formed by a plurality of portions (36) to contact forming the pressure sensitive switch and contacting with or separating from the corresponding plurality of portions to be contacted and a partition member (18) disposed between the first and the second films and formed with a plurality of penetration holes (30) positioned opposite to the plurality of pressure sensitive switches (20) and an air passage (32) communicating with the plurality of penetrating holes (30) and exposed to the atmosphere, wherein
the first and the second films (14, 16), between which the partition member (18) is interposed are attached to a seating surface of the seat (2) under the films being bent, and wherein
the partition member (18) includes a relief hole (34) provided between a bent portion (40) formed by the first and the second films when attached to the seating surface of the seat and one of the plurality of pressure sensitive switches (20) positioned closest to the bent portion for absorbing a strain generated due to a perimeter difference between the first and the second films.

2. The seating load detecting device according to claim 1, wherein the relief hole (34) is formed to be in communication with a communication hole, provided, at least, at one of the first and the second films.

3. The seating load detecting device according to claim 2, the relief hole (34) is not in communication with the air passage (32).

4. The seating load detecting device according to claim 1, the relief hole (34) is in communication with the air passage (32).

5. The seating load detecting device according to claim 4, a length of the relief hole (34) in a width direction relative to the seating load detecting device (19) is set to be longer than a length of the air passage (32) in a width direction.

6. The seating load detecting device according to any of claims 1, 4 and 5, the relief hole (34) is provided only at the partition member (18) and is closed by the first and the second films.

7. The seating load detecting device according to any one of claims 1 through 6, a length of the relief hole (34) in a longitudinal direction relative to the seating load detecting device (19) is set to be longer than a length of the penetration hole (30) in a longitudinal direction.

8. The seating load detecting device according to any one of claims 1 through 7, the length of the relief hole (34) in the width direction relative to the seating load detecting device is equal to or more than the half of a portion where the relief hole (34) is to be provided in a width direction relative thereto.

9. The seating load detecting device according to any of claims 1 through 8, the relief hole (34) is provided to be of rectangular, oval or hexagonal shape.

10. The seating load detecting device according to claims 1 through 9, the first and the second films (14, 16) and the partition member (18) are overlapped by adhesion by means of adhesive agent or by welding by means of ultrasonic wave welding.

## Patentansprüche

1. Sitzlasterkennungsvorrichtung (10) mit einer bandförmigen ersten Folie (14), welche durch eine Vielzahl an berührt zu werdende Abschnitte (28) ausgebildet ist, wobei ein druckempfindlicher Schalter (20) zum Erkennen eines Sitzzustandes eines in einem Sitz (2) Sitzenden und ein Schalterverbindungskabel (26), welches die Vielzahl an berührt zu werdende Abschnitte (28) verbindet, jeweils durch einen der voneinander um einen Abstand entfernten Abschnitte ausgebildet sind, mit einer bandförmigen zweiten Folie (16), welche so angeordnet ist, dass sie zur ersten Folie (14) zeigt, und welche ausgebildet ist durch eine Vielzahl an zu berührende Abschnitte (36), die den druckempfindlichen Schalter (20) bildet und die die entsprechende Vielzahl an berührt zu werdende Abschnitte (28) berührt oder sich von der entsprechenden Vielzahl an berührt zu werdende Abschnitte (28) trennt, und mit einem Trennelement (18), welches zwischen der ersten Folie (14) und der zweiten Folie (16) angeordnet ist und ausgebildet ist mit einer Vielzahl an Durchdringungslöcher (30), welche gegenüber der Vielzahl an druckempfindlichen Schalter und gegenüber einem mit der Vielzahl an Durchdringungslöcher (30) in Verbindung stehenden Luftdurchlass (32) positioniert und der Atmosphäre ausgesetzt ist, wobei die erste Folie (14) und die zweite Folie (16), zwischen welchen das Trennelement (18) angeordnet ist, an einer Sitzoberfläche des Sitzes (2) unter den gebogenen Folien angebracht sind und wobei
das Trennelement (18) versehen ist mit einem Entlastungsloch (34), welches vorgesehen ist zwischen einem durch die erste Folie (14) und die zweite Folie (16) gebildeten, wenn die erste Folie (14) und die zweite Folie (16) an der Sitzoberfläche des Sitzes (2) angebracht sind, gebogenen Abschnitt (40) und einem der Vielzahl an druckempfindlichen Schalter (20), welcher am nächsten zu dem gebogenen Abschnitt (40) positioniert ist, zum Aufnehmen einer aufgrund einer Durchmesserdifferenz zwischen der ersten Folie (14) und der zweiten Folie (16) erzeugten Dehnung.

2. Sitzlasterkennungsvorrichtung (10) gemäß Anspruch 1, wobei das Entlastungsloch (34) so ausgebildet ist, dass es mit einem zumindest an einer der ersten und zweiten Folie vorgesehenen Verbindungsloch in Verbindung steht.

3. Sitzlasterkennungsvorrichtung (10) gemäß Anspruch 2, wobei das Entlastungsloch (34) nicht mit dem Luftdurchlass (32) in Verbindung steht.

4. Sitzlasterkennungsvorrichtung (10) gemäß Anspruch 1, wobei das Entlastungsloch (34) mit dem Luftdurchlass (32) in Verbindung steht.

5. Sitzlasterkennungsvorrichtung (10) gemäß Anspruch 4, wobei eine Länge des Entlastungslochs (34) in einer Breitenrichtung relativ zu der Sitzlasterkennungsvorrichtung (10) so festgelegt ist, dass sie größer ist als die Länge des Luftdurchlasses (32) in einer Breitenrichtung.

6. Sitzlasterkennungsvorrichtung (10) gemäß einem der Ansprüche 1, 4 und 5, wobei das Entlastungsloch (34) nur an dem Trennelement (18) vorgesehen und durch die erste Folie (14) und die zweite Folie (16) verschlossen ist.

7. Sitzlasterkennungsvorrichtung (10) gemäß einem der Ansprüche 1 bis 6, wobei eine Länge des Entlastungslochs (34) in einer Längsrichtung relativ zu der Sitzlasterkennungsvorrichtung (10) so festgelegt ist, dass sie größer ist als die Länge des Durchdringungslochs (30) in einer Längsrichtung.

8. Sitzlasterkennungsvorrichtung (10) gemäß einem der Ansprüche 1 bis 7, wobei eine Länge des Entlastungslochs (34) in einer Breitenrichtung relativ zu der Sitzlasterkennungsvorrichtung (10) gleich einer oder mehr als die Hälfte eines Abschnitts ist, an welchem das Entlastungsloch (34) relativ zu diesem in einer Breitenrichtung vorgesehen ist.

9. Sitzlasterkennungsvorrichtung (10) gemäß einem der Ansprüche 1 bis 8, wobei das Entlastungsloch (34) rechteck-, oval- oder hexagonalförmig ist.

10. Sitzlasterkennungsvorrichtung (10) gemäß einem der Ansprüche 1 bis 9, wobei die erste Folie (14), die zweite Folie (16) und das Trennelement (18) durch Adhäsion mittels Kleber oder durch Verschweißen mittels Ultraschallwellenschweißen überlagert sind.

## Revendications

1. Dispositif de détection de charge d'appui (10) comprenant un premier film en forme de bande (14) formé par une pluralité de parties (28) destinées à être en contact, chaque partie étant séparée avec une distance l'une par rapport à l'autre formant un commutateur sensible à la pression (20) pour détecter un état d'appui d'un occupant d'un siège et un câblage de connexion de commutateur (26) connectant la pluralité de parties destinées à être en contact, un second film en forme de bande (16) disposé en face du premier film et formé par une pluralité de parties (36) à mettre en contact, formant le commutateur sensible à la pression et se mettant en contact avec ou se séparant de la pluralité correspondante de parties destinées à être mises en contact et un élément de séparation (18) disposé entre les premier et second films et formé avec une pluralité de trous de pénétration (30) positionnés à l'opposé de la pluralité de commutateurs sensibles à la pression (20) et un passage d'air (32) communiquant avec la pluralité de trous de pénétration (30) et exposé à l'atmosphère, dans lequel les premier et second films (14, 16) entre lesquels l'élément de séparation (18) est intercalé, sont fixés à une surface d'appui du siège (2) sous les films qui sont pliés, et dans lequel :
l'élément de séparation (18) comprend un trou en relief (34) prévu entre une partie pliée (40) formée par les premier et second films lorsqu'ils sont fixés à la surface d'appui du siège et l'un de la pluralité des commutateurs sensibles à la pression (20) positionnés le plus à proximité de la partie pliée pour absorber une contrainte générée en raison d'une différence de périmètre entre les premier et second films.

2. Dispositif de détection de charge d'appui selon la revendication 1, dans lequel le trou en relief (34) est formé pour être en communication avec un trou de communication, prévu, au moins au niveau de l'un du premier et du second film.

3. Dispositif de détection de charge d'appui selon la revendication 2, le trou en relief (34) n'est pas en communication avec le passage d'air (32).

4. Dispositif de détection de charge d'appui selon la revendication 1, le trou en relief (34) est en communication avec le passage d'air (32).

5. Dispositif de détection de charge d'appui selon la revendication 4, une longueur du trou en relief (34) dans une direction de largeur par rapport au dispositif de détection de charge d'appui (19) est déterminée pour être plus longue qu'une longueur du passage d'air (32) dans le sens de la largeur.

6. Dispositif de détection de charge d'appui selon l'une quelconque des revendications 1, 4 et 5, le trou en relief (34) est prévu uniquement au niveau de l'élément de séparation (18) et est fermé par le premier et le second film.

7. Dispositif de détection de charge d'appui selon l'une quelconque des revendications 1 à 6, une longueur du trou en relief (34) dans une direction longitudinale par rapport au dispositif de détection de charge d'appui (19) est déterminée pour être plus longue qu'une longueur du trou de pénétration (30) dans une direction longitudinale.

8. Dispositif de détection de charge d'appui selon l'une quelconque des revendications 1 à 7, la longueur du trou en relief (34) dans le sens de la largeur par rapport au dispositif de détection de charge d'appui est égale ou supérieure à la moitié d'une partie où le trou en relief (34) doit être prévu dans le sens de la largeur par rapport à ce dernier.

9. Dispositif de détection de charge d'appui selon l'une quelconque des revendications 1 à 8, le trou en relief (34) est prévu pour être de forme rectangulaire, ovale ou hexagonale.

10. Dispositif de détection de charge d'appui selon l'une quelconque des revendications 1 à 9, le premier et le second film (14, 16) et l'élément de séparation (18) se chevauchent par adhérence, au moyen d'un agent adhésif ou par soudage au moyen du soudage par ultrasons.
